# EUROPEAN PATENT APPLICATION

(11) **EP 1 223 527 A2**
(43) Date of publication of application: **17.07.2002**
(21) Application number: 01850227.8
(22) Date of filing: 27.12.2001
(51) Int. Cl.: G06F 17/60

(54) **E-mail service provider and method for filtering unsolicited e-mail**

(30) Priority: 15.01.2001 US 760935
(71) Applicant: TELEFONAKTIEBOLAGET LM ERICSSON, 126 25 Stockholm (SE)
(72) Inventor: Cooper, Gerald M., Gretna, Virginia (US)
(74) Representative: Stenborg, Anders Vilhelm

(57) **Abstract**

An email service provider and a method for filtering unsolicited email are disclosed. An email service provider includes a port receiving and transmitting email, and a server. The server selectively creates a dynamic address as the sending address associated with email transmitted to a target address, with the dynamic address being anonymously associated with the first user address. The server may further selectively forward email addressed to the dynamic address to the first user address, by forwarding mail to the dynamic address only when it is from the target address, and/or by forwarding only a selected amount of mail to the dynamic address and/or for only a selected period of time. The server may also include a tag in the dynamic address associated with the target address, and add the tag to text of received email addressed to the dynamic address.

## Description

### BACKGROUND OF THE INVENTION

The present invention is directed toward electronic mail or email, and more particularly toward reducing the problems resulting from unwanted email.

Electronic mail ("email") has become indispensable to many users due to, among other things, its speed, efficiency and low cost. However, that low cost has made it particularly susceptible to abuse by advertisers and others trying to reach large "audiences" without having to incur the costs of postage and paper handling of regular ("snail") mail. Thus, as with regular mail, email users face a growing problem in which their email addresses and identities are being collected in large databases which are used (or sold to others to use) to generate unwanted mail to those addresses. This results in email users receiving more and more unwanted and unsolicited email ("spam").

Unsolicited email such as spam requires email users to spend significant time weeding through their email to find the email which is legitimate communication (and risks not noticing legitimate communications and/or accidentally deleting legitimate communications when deleting the unwanted mail). In some cases, email users have chosen to change their email address in an attempt to stop the junk mail, but changing addresses makes it equally difficult for acceptable correspondents to get email through, burdens the email user to attempt to get the new address to all desired correspondents, and eventually such unwanted mail will probably resume at the new address anyway. Moreover, the handling of spam in the communication system (e.g., the communication of the spam between email service providers and between the service providers and the email users) is significantly burdened. For example, the downloading of email from a user's service provider to the user's computer can take significant time, particularly where the email is large (e.g., includes graphics files as is common with advertisement), tying up the computer and delaying the user from productive work, as well as costing the user money where Internet access is priced based on access time (even when not, access via modem connection typically will involve phone connection costs).

As a result, it has been said that spam is the "scourge of electronic mail" which can seriously interfere with the operation of public services, to say nothing of the effect it may have on any individual's email system. Spammers are, in effect, taking resources away from users and service suppliers without compensation and without authorization. Spamming is such a serious problem for service providers and innocent users that litigation and other legal avenues have been variously pursued to address the problem.

In addition to legal avenues, various technical approaches have also been tried to protect users from this problem.

For example, a user who is the victim/recipient of unwanted email can notify his email service provider (typically his Internet Service Provider or ISP) of a problem with email being received from a particular email address. In that situation, the ISP can set its server (configure its email engine) to filter mail from the offending email address. Alternatively, the victim/recipient can contact the ISP of the offending email sender, and that ISP can filter email from the sender or even terminate service to the offender. While this can work effectively for specific problem spammers, it requires that the victim/recipient take burdensome action every time an offending spammer is identified. Further, the problem will exist, and part of the victim/recipient's bandwidth which he pays for will continue to be used for such spam until the victim/recipient recognizes a particular spammer and takes action (including figuring out whom to contact). Still further, the ISP in such situations is forced to manually configure its mail system to filter the unwanted messages for every spammer for which it receives a complaint. Of course, the ISP (particularly the spammer's ISP) may also in each case be forced to undergo a burdensome investigation of the validity of any received complaint to ensure that service is not wrongly terminated.

Another approach which has been used has been for the user to configure his own local email client (*e.g.,* his own computer) to ignore and delete unwanted email. Of course, this approach still requires the user to identify the offending mail in some manner and take affirmative steps to configure his computer. Until the problem is recognized and actions taken, bandwidth will be taken and associated costs will be incurred in handling the unwanted email. Further, even if the burden of taking such actions were acceptable, such steps may not be readily recognizable to a casual/non-technical user. Still further, where the action in stopping the unwanted email is taken at the local client, the user's bandwidth will still be tied up in receiving the email (after which it will be identified and deleted).

Some tools have been created to take the burden from the user and to automatically eliminate spam. Typically, these tools will examine incoming email messages and search for indications that it is spam (*e.g.,* an indication that a large number of messages have been sent from a single source). Of course, such examination of all email can be burdensome on the processing resources of the ISP, and there is a real chance that legitimate mass mailers may be falsely identified as spam sources (many users do wish to receive mass mailings from particular sources, and those users may be denied such mailings as a result of filtering other, unwanted spam). Further, until a spammer is adequately identified from examination of mail, bandwidth will continue to be used for email of that spammer.

In view of the above problems, yet another approach which has been used has been the creation of decoy email accounts with a decoy address to attract spam. Such decoy accounts are specially created, and are never used to solicit email, and therefore if any email is sent to that account it can be assumed that the email is spam. This tool can examine the presumed spam for the email address of the sender/originator and can also examine the assumed spam for content, so that email from that address can thereafter be filtered as can email from other sender/originator addresses which are found to have similar content. Even this solution has significant drawbacks, however. Since the decoy accounts are not used to solicit email, there may be a lengthy wait before any spam originator learns of it and adds it to its database. In fact, such accounts may never be discovered by spammers unless they are intentionally distributed by, for example, posting test messages in newsgroups (and then such test messages themselves, ironically, could be considered as a form of spam). Further, as with the other procedures which have been tried, until a particular spammer is identified (which could take a considerable amount of time), unwanted email from the spammer will continue to use bandwidth and storage resources of both the ISP and user.

The present invention is directed toward overcoming one or more of the problems set forth above.

### SUMMARY OF THE INVENTION

In one aspect of the present invention, an email service provider includes a port receiving and transmitting email, and a server. The server selectively creates a dynamic address as the sending address associated with email transmitted to a target address from the first user address, with the dynamic address being anonymously associated with the first user address. The server further selectively forwards email addressed to the dynamic address to the first user address.

In one form, the server associates the dynamic address with the target address, and rejects mail to the dynamic address from a sender address which is not the target address. In another form, the server forwards email addressed to the dynamic address for only a selected period of time. In still another form, the server forwards only a selected amount of email addressed to the dynamic address.

In another aspect of the present invention, an email service provider includes a port and a server, where the server selectively creates a dynamic address as the sending address associated with email transmitted to a target address, where the dynamic address includes a tag associated with the target address, and the server adds the tag to text of received email addressed to the dynamic address.

In still other aspects of the present invention, methods of controlling electronic mail and identifying unwanted electronic mail are provided in accordance with the above described aspects of the invention.

### BRIEF DESCRIPTION OF THE DRAWINGS

Figure 1 is a diagram of an email system with which the present invention may be advantageously used;
Figure 2 is a flow chart of a process by which an email service provider may handle email which a customer wishes to be transmitted according to the present invention; and
Figure 3 is a flow chart of a process by which an email service provider may handle email addressed to a customer in accordance with the present invention.

### DETAILED DESCRIPTION OF THE INVENTION

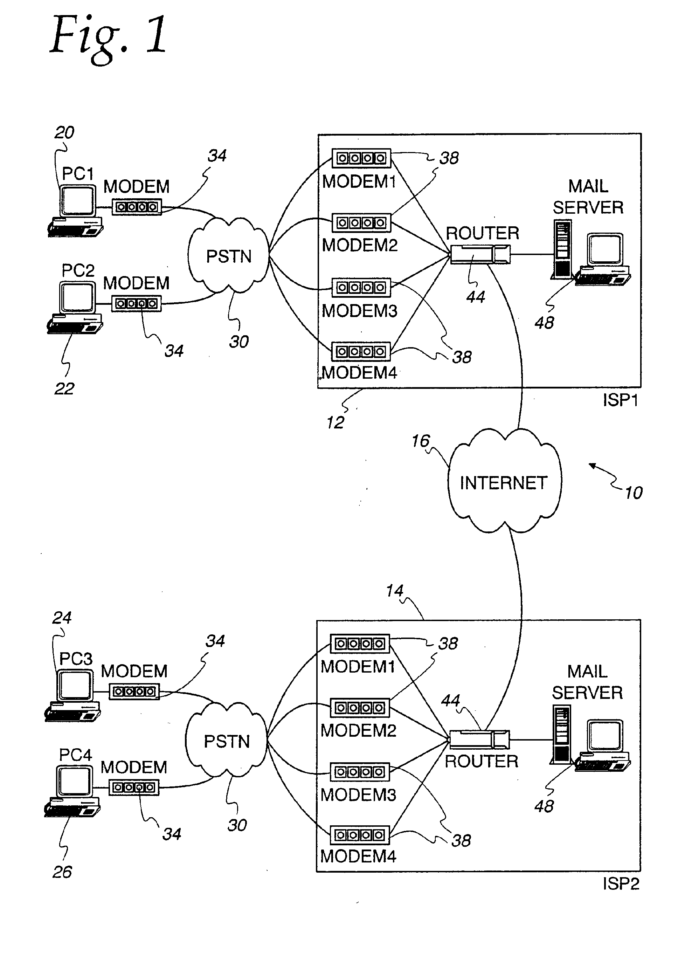

A system 10 of handling email is illustrated in Figure 1. As detailed herein, the present invention may be used with this system 10. However, it should also be understood that the system 10 is merely illustrative, and the present invention could also be advantageously used with other systems of handling email.

As illustrated in Fig. 1, the system 10 may include a plurality of email service providers, two of which (12, 14) are illustrated. Typically, the email service providers 12, 14 are also Internet service providers (ISPs), although they need not be. The various email service providers 12, 14 are connected as part of the system 10 (for example, via the Internet 16 as illustrated). Of course, it should be understood that the email system may and typically does include a large number of email service providers, with only two shown in Fig. 1 for simplicity.

One email service provider 12 provides email service to the computers 20, 22 of its customers, and the other email service provider 14 provides email service to the computers 24, 26 of its customers. Again, each email service provider 12, 14 will typically provide service to many more than two customers 20-26, with only two shown for each provider 12, 14 in Fig. 1 for simplicity.

In the illustrative system 10 shown in Fig. 1, the customer computers 20-26 communicate with the email service providers 12, 14 via a public service telephone network 30 using modems 34 associated with the customer computers 20-26 and modems 38 at ports to the email service providers 12,14. Such a method of transmitting electronic signals is well known to those skilled in the art and will not be described in detail here. Further, it should be understood that the present invention may be used with systems in which other structures are used to transmit electronic signals, such as digital subscriber lines (DSLs).

In the email service providers 12, 14 illustrated in Fig. 1, the modems 38 are used to receive and transmit electronic signals (such as email), which signals are communicated with a router 44 which operates with a mail server 48 to control and direct the transmission of the electronic signals.

Broadly stated, in accordance with the present invention, when an email signal is received from a customer's computer 20, 22, the server 48 will selectively replace the customer's email address with a dynamic email address so that the email signal sent out over the Internet 16 may include the dynamic email address rather than the customer's email address as the sender's email address. The replacement of the customer's email address with a dynamic email address may or may not be done according to the customer's instructions in the email signal. When a dynamic email address is used, however, the customer's email address will therefore be anonymous to the recipient of the email (*i.e.*, will not be known to or determinable by the recipient from the dynamic email address indicated in the email). Any reply to the dynamic email address may, however, be associated by the email service provider 12, 14 with the email address of its customer and such email to that customer may be distinguished and selectively handled differently than email to the customer's email address.

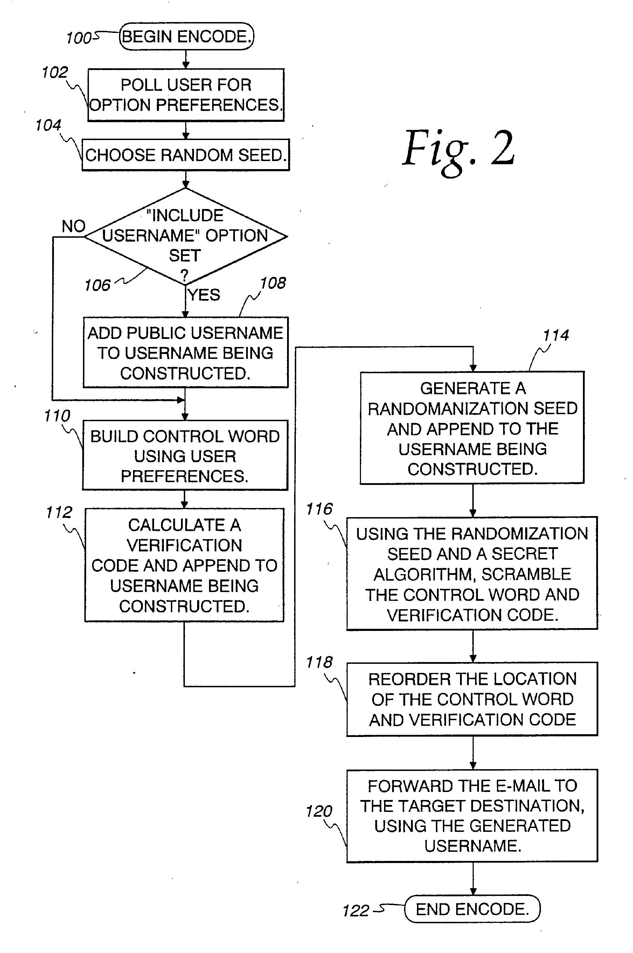

Fig. 2 is a flow chart of an exemplary method for creating a dynamic address according to the present invention. Specifically, when an email service provider 12, 14 receives an email from a customer's computer 20-24 for transmission to another (target) address, the provider 12, 14 would first check to see whether the customer selected a "secure send" option by checking for an indication of that selection in the email. If no such option is selected, then email would be handled in a normal manner by forwarding it to the target address (via another email service provider if necessary). As will be understood, when the customer is sending the email to trusted recipients such as business associates or family members, the "secure send" option would not be chosen, and the trusted associates would receive email from the customer with his actual email address indicated. However, when sending email to others, the "secure send" option causing use of the dynamic address according to the present invention would be chosen to protect the customer from receiving unwanted replies to that email.

Each email service provider 12, 14 typically will have a specific domain, such as "aol.com" for America OnLine, with addresses typically in the form of "username@domain", with the username being specific to the customer and the domain being specific to the email service provider. In accordance with the present invention, the service provider 12, 14 may establish one or more separate domains to be used only for the dynamic addresses. The separate domains may be established so that there would be no obvious linkage between the regular and dynamic addresses to further provide protection against a spam source reverse engineering the dynamic address in order to determine the customer's actual email address.

In accordance with the present invention, if the "secure send" option is selected by the customer in connection with an email which he is sending, the server 48 begins creation of a dynamic address as the address attached to the email as the source or sender address by beginning to encode the customer's email address at 100 in Fig. 2. The server 48 may also check the email for further option choices at 102 by polling the user for option preferences, which options may be used in generating the dynamic address and/or in determining what email to filter to the dynamic address.

Other options which may be chosen by the customer / email sender may include the following:
A "target tagging" option can be provided for specifying whether or not the dynamic address should be linked to a particular destination address or name. For example, a text string could be entered which could be either encoded into the dynamic address or be stored locally and linked to an index encoded in the dynamic address by the email service provider 12, 14. This text would be added to incoming email messages sent to the dynamic address which would identify the original recipient of the address (e.g., identify the target email address of the original email to which the dynamic address was attached) so that email addressed to the dynamic address but not originating from the address of the original recipient could be identified and, if desired, filtered and not forwarded to the customer's computer 20-26.
A "source filtering" option can be provided whereby the customer would specify as part of the "secure send" option that only email from the address of the original recipient of the email to which the dynamic address is appended would be accepted. Email to the dynamic address received from a different email address would be filtered by the email service provider 12, 14 of the customer and therefore would not be forwarded to the customer's computer 20-26.
A "time limited filtering" option can also be provided whereby the customer would specify as part of the "secure send" option that email to the dynamic address should only be accepted for a specified period of time. Email to the dynamic address received after the specified time period would be rejected and not forwarded to the customer's computer 20-26.
A "fixed number of uses" option can also be provided whereby the customer would specify as part of the "secure send" option that only a specified number of messages to the dynamic address should only be accepted. Email to the dynamic address after the specified number of messages have already been received would be rejected and not forwarded to the customer's computer 20-26.
A "include username" can also be provided whereby the user can specify that his regular username (e.g., the "john" part of his "john@esp.com" email address) be included as part of the dynamic address. Including the normal username in the dynamic address would make the dynamic address more recognizable to recipients but would still be different given the other changes made to the address as discussed below.
It should then be understood that the above options could be used either alone or in various combinations in accordance with the present invention. Further, still other options could be provided within the scope of the present invention.

The choice of a dynamic address could be constructed in a number of ways, and each email service provider could use a different algorithm since only the originating email service provider 12, 14 (*i.e.*, the email service provider of the customer sending the email) will be required to decode the information encoded into the dynamic address. Such variability would still further enhance the operation of email systems which use the present invention, by further complicating the task of a spam emailer that might attempt to reverse engineer the process to defeat the protection provided to the customers. Accordingly, it should be understood that the method / algorithm illustrated in Fig. 2 is merely one of a virtually infinite number of algorithms which could be used to construct the dynamic address.

According to the illustrative method of Fig. 2, creation of the username of the dynamic address begins at 104 with the choice of a random seed as part of the dynamic address. The process at 106 then checks to see whether or not the "include username" option has been selected. If it has, then at 108, the username is added to the username being constructed for the dynamic address. If it has not, then step 108 is skipped. In either case, a control word using the customer's preferences (*e.g.*, selected options) is built at 110, and a verification code is then suitably calculated and appended at 112 to the username being constructed for the dynamic email. The verification code may be used to determine whether or not a dynamic address for which email is received at the email service provider 12, 14 is valid (and not just an erroneous address). A randomization seed is then generated and appended at 114 to the dynamic address username being constructed and, using the randomization seed and a secret algorithm (*i.e.*, an algorithm essentially known only to the customer's email service provider 12, 14), the control word and verification code are scrambled at 116. The location of the control word and the verification code are then reordered at 118, after which the email will be forwarded to the target address at 120 with the generated username attached thereto as the sending address. Encoding thus ends at 122.

An illustration of the creation of a dynamic address to be attached to the email of a customer having an email address of "john@isp.com" for email for which the "secure send" option has been selected would thus be as follows:

| Step | Action | email address |
|---|---|---|
| 1 | Use spatate secure domain name | @secure_isp.com |
| 2 | Add original usename (at 108) (if "include usename" option selected) | john@secure_isp.com |
| 3 | Add control data such as verification code at 112 | john1439@secure_isp.com |
| 4 | Add randomization seed at 114 | john14394E@secure_isp.com |
| 5 | Add checksum | john14394ED1@secure_isp.co m |
| 6 | Encrypt control data, randomization seed and checksum at 116 | john4756B13C@secure_isp.co m |
| 7 | Reorder control data, randomization seed and checksum at 118 | john6735C1B4@secure_isp.co m |

The email from john@isp.com would then be sent to its target address with john6735C1B4@secure_isp.com appended thereto as the apparent email address of the sender.

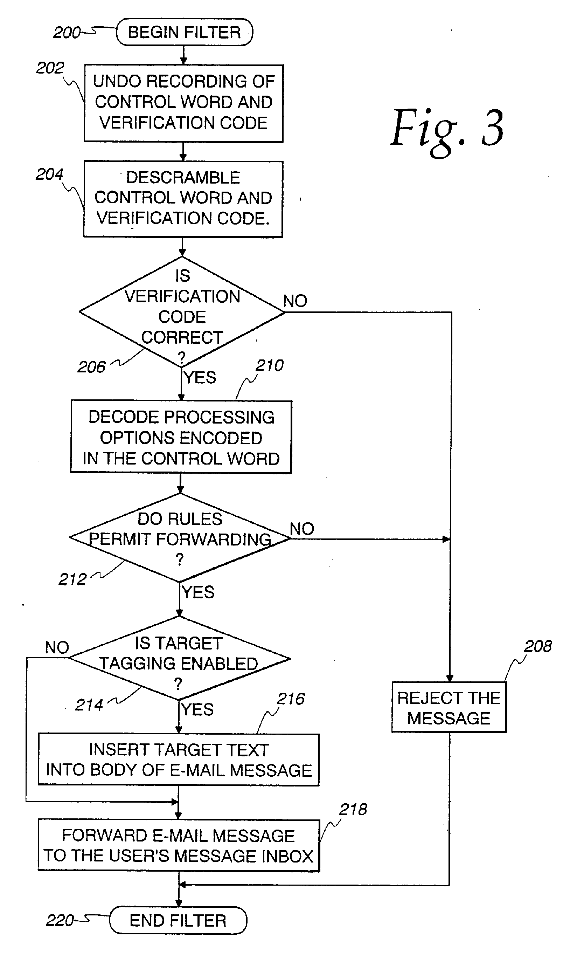

Thereafter, should the recipient of the email send email to the dynamic address (*e.g.*, john6735C1B4@secure_isp.com), the email service provider 12,14 of the customer by whom the original email was sent will receive the email at the secure domain and be handled as illustrated in Fig. 3.

Specifically, email to the dynamic address is first identified by the email service provider of the customer to whom the email is directed via the dynamic address (*e.g.*, by the fact that the email is addressed to the secure domain used for dynamic addresses.

The server 48 of the email service provider 12, 14 then begins filtering the email at 200. As a first step, the reordering of the control word and verification code (which took place at 118 when the dynamic address was generated) is undone at 202, and the control word and verification code (which were scrambled at 116 when the dynamic address was generated) is unscrambled at 204.

The unscrambled verification code is then checked at 206 to determine whether it is valid. If it is not, the email message is rejected at 208. If it is valid, then the dynamic address is presumed to be valid and processing continues to 210 where the email processing options encoded in the control word are decoded.

Processing of the received email then continues at 212, where it is determined whether the rules set according to the selected options permit forwarding of the email to the customer. For example, if the "source filtering" option was selected, the email would be checked to determine whether it was sent from the address of the original recipient of the email to which the dynamic address was appended. If it was sent from the address of the original recipient, then processing would continue to 214; if it was not, processing would continue to 208 (where the message would be rejected). As another example, if the "time limited filtering" option was selected, the server 48 would determine whether the time limit had been exceeded when the email was received. If the time limit was not exceeded, then processing would continue to 214; if it was exceeded, processing would continue to 208 (where the message would be rejected). As yet another example, if the "fixed number of uses" option was selected, the server 48 would determine whether more than the fixed number of acceptable responses to the dynamic address had been received. If the number of messages had not exceeded the limit, then processing would continue to 214; if it was exceeded, processing would continue to 208 (where the message would be rejected). Of course, as previously mentioned, any combination of such options for filtering email would also be selected and then all used to filter email received to the dynamic address.

Assuming that the rules from the selected options permit forwarding of the email, then at 214 it is determined whether or not the "target tagging" option was enabled. If the "target tagging" option was selected, the target text is inserted into the body of the email at 216. The text will then enable the customer to identify the recipient of the original mail from which the return email was generated, and therefore identify an unreliable source *(i.e.,* if the customer receives spam, he will know the original recipient of the customer's email who was the source of the dynamic address for the spammer), and then can take appropriate action such as ceasing email with that original recipient or speaking to the recipient to stress that the customer does not want that recipient to share his email address with others.

Whether or not target tagging is enabled as determined at 214, processing finally proceeds to 218 where the filtered email is forwarded to the customer's message box in the server 48 of the customer's email service provider 12, 14, from which it is transmitted to the customer's computer 20-26 when requested. Filtering of that email to the dynamic address ends at that point at 220.

it should now be appreciated that numerous advantages can be provided by the present invention. Unwanted email can be rejected immediately by the email service provider 12, 14 based simply on the target address. As a result, the unwanted email is not transmitted to the customer's computer, which not only allows the customer to not be burdened with weeding through unnecessary mail, but also does not use up band width and connect time (and associated costs) to unnecessarily transmit that unwanted email from the email service provider 12, 14 to the customers' computers 20-26. Further, the email software used by the customers does not have to be modified if it is web based or may be only minimally modified if based on the user's computer to simply provide the customer with the ability to selected the"secure send" and related options and to transmit those options to the email service provider 12, 14 when sending an email message. Still further, this is a feature which each email service provider 12, 14 can implement independently of the other email service providers, providing this option as a selling point for potential customers versus email service providers which do not provide the option. Additionally, there is no guess work involved in identifying messages to be rejected, and no problem with false identification of spammers. No user intervention is necessary to identify and filter spam, and there is no need to use decoy accounts or newsgroup postings to identify spammers. Further, the "target tagging" option allows the customer to identify his email correspondents who transmit his email address to undesirable sources.

Still other aspects, objects, and advantages of the present invention can be obtained from a study of the specification, the drawings, and the appended claims. It should be understood, however, that the present invention could be used in alternate forms where less than all of the objects and advantages of the present invention and preferred embodiment as described above would be obtained.

## Claims

1. An email service provider providing service to a user having a first user address, comprising:
a port receiving and transmitting email; and
a server which
selectively creates a dynamic address as a sending address associated with email transmitted to a target address from said first user address, said dynamic address being anonymously associated with said first user address, and
selectively forwards email addressed to said dynamic address to said first user address.

2. The email service provider of claim 1, further comprising a router cooperating with said server to selectively transmit email.

3. The email service provider of claim 1, wherein said server adds to said dynamic address a tag associated with said target address, and adds said tag to text of email received from a sender address to said dynamic address.

4. The email service provider of claim 1, wherein said server associates said dynamic address with said target address, and rejects mail to said dynamic address from a sender address which is not said target address.

5. The email service provider of claim 1, wherein said server forwards email addressed to said dynamic address for only a selected period of time.

6. The email service provider of claim 1, wherein said server forwards only a selected amount of email addressed to said dynamic address.

7. The email service provider of claim 1, wherein said server includes a user name associated with said first user address in said selectively created dynamic address.

8. An email service provider providing service to a user having a first user address, comprising:
a port receiving and transmitting email; and
a server which
selectively creates a dynamic address as a sending address associated with email transmitted to a target address from said first user address, said dynamic address including a tag associated with said target address; and
adds said tag to text of received email addressed to said dynamic address.

9. The email service provider of claim 8, further comprising a router cooperating with said server to selectively transmit email.

10. A method of controlling electronic mail to a user email address, comprising:
selectively generating a dynamic address as a sending address in place of said user email address when sending mail to a target address from said user email address, said dynamic address being anonymously associated with said user email address;
selectively accepting mail addressed to said dynamic address at said user email address.

11. The method of claim 10, wherein said selectively generating a dynamic address as a sending address in place of said user email address when sending mail to a target address from said user email address comprises adding a tag associated with said target address; and further comprising adding said tag to text of mail addressed to said dynamic address.

12. The method of claim 10, wherein:
said selectively generating a dynamic address as a sending address in place of said user email address when sending mail to a target address from said user email address comprises associating said dynamic address with said target address; and
said selectively accepting mail addressed to said dynamic address at said user email address comprises accepting mail to said dynamic address only from said target address.

13. The method of claim 10, wherein said selectively accepting mail addressed to said dynamic address at said user email address comprises accepting mail to said dynamic address only for a selected period of time.

14. The method of claim 10, wherein said selectively accepting mail addressed to said dynamic address at said user email address comprises accepting only a selected amount of mail to said dynamic address.

15. The method of claim 10, wherein said user email address includes a user name, and said selectively generating a dynamic address as a sending address in place of said user email address when sending mail to a target address from said user email address comprises generating a dynamic address which includes said user name.

16. A method of identifying unwanted electronic mail to a user email address, comprising:
selectively generating a dynamic address as a sending address in place of said user email address when sending mail to a target address from said user email address, said dynamic address including a tag associated with said target address; and
adding said tag to text of mail addressed to said dynamic address.
